# EUROPÄISCHE PATENTANMELDUNG

(11) **EP 4 379 114 A1**
(43) Veröffentlichungstag der Anmeldung: **05.06.2024**
(21) Anmeldenummer: 23020527.0
(22) Anmeldetag: 28.11.2023
(51) Int. Cl.: D05C 15/16, B65H 61/00, G01B 11/04

(54) **VORRICHTUNG ZUM ERFASSEN DER WEGLÄNGE BEIM FADENEINLAUF WENIGSTENS EINES EINZELFADENS EINER FADENSCHAR AN EINER TEXTILMASCHINE**

(30) Priorität: 29.11.2022 EP 22020587
(71) Anmelder: Textech Struve GmbH, 83620 Feldkirchen-Westerham (DE)
(72) Erfinder: Die Erfindernennung liegt noch nicht vor

(57) **Zusammenfassung**

Die Erfindung betrifft eine Vorrichtung zur Messung der einlaufenden Weglänge eines, mehrerer oder einer Vielzahl von Fäden an einer Textilmaschine. Die Längen werden dabei laufend während des Produktionsvorgangs der Textilmaschine erfasst. Die Vorrichtung verwendet dafür einen auf einem Chip integrierten Wegsensor wie er beispielsweise in Computermäusen eingesetzt wird.

## Beschreibung

Die vorliegende Erfindung betrifft eine Vorrichtung zum Erfassen der zurückgelegten Weglänge pro Zeitintervall wenigstens eines einlaufenden Fadens einer Fadenschar in der Produktion textiler Flächen, wobei die Fadenschar eine Mehrzahl von im Wesentlichen parallel zueinander geführten einzelnen Fäden aufweist, wobei weiter die Vorrichtung einen Sensor aufweist der die Bewegung des Fadens in Transportrichtung misst.

Für die Herstellung von textilen Flächen werden in der Regel eine oder mehrere Fadenscharen einer Textilmaschine zugeführt und dort verarbeitet. Dabei kann sich die einlaufende Weglänge zugeführten Fadens von Maschinenzyklus zu Maschinenzyklus und von Faden zu Faden unterscheiden, um zum Beispiel gemusterte Ware zu erzeugen. Zur Sicherung der Warenqualität ist es vorteilhaft, die einlaufende Weglänge jedes Fadens zeitabhängig zu messen, da Abweichungen zu Störung des beabsichtigten Musters, Streifigkeit der Ware oder anderen Produktionsfehlern führen, die minderwertige Ware zur Folge haben.

Häufig kommt es durch Verschmutzung oder fehlerhafte Fadenführung zu Abweichungen im Fadeneinlauf, die durch eine derartige Messung frühzeitig erkannt werden.

Zudem erlaubt die Messung die Überprüfung wichtiger Prozessparameter und damit die Reproduzierbarkeit von Artikeleigenschaften sicherzustellen.

Des Weiteren verbessert die Messung der einlaufenden Fadenlänge die Abstimmung des realen Garnverbrauchs mit vorausberechneten Werten und damit die Materialplanung.

Besonders nachteilig wirken sich Abweichungen vom geplanten Verbrauch aus, wenn die einzelnen Fäden jeweils von einer Garnspule abgezogen werden, da das Auslaufen der ersten Garnspule häufig den Produktionsprozess beendet und die nicht verbrauchten Reste der Garnspulen als Abfall verbleiben.

Um die Produktion textiler Flächen in der oben genannten Weise zu überprüfen, ist es von Vorteil, möglichst alle Fäden einer Fadenschar einzeln zu überwachen. Dabei stellt der häufig sehr geringe Fadenabstand an Textilmaschinen eine besondere Herausforderung dar, ebenso wie die große Anzahl zu überwachender Fäden. Im unten weiter ausgeführten Beispiel der Herstellung von Teppichen im Tuftingverfahren sind Fadenabstände von 5/64., 1/10 und 1/8 Zoll häufig. Bei einer gängigen Arbeitsbreite von 4-5 m ergeben sich damit Fadenzahlen in der Größenordnung von 2000 Fäden.

Der verfügbare Bauraum an Textilmaschinen ist meist sehr begrenzt und die Fadenführung soll durch das Messsystem möglichst wenig verändert werden, um Auswirkungen auf das Warenbild zu vermeiden.

Ziel der Erfindung ist es daher, ein Messsystem bereitzustellen, das mit einer Vielzahl von Sensoren die Transportbewegung möglichst aller Fäden einer Fadenschar überwachen kann.

Die geringen Fadenabstände erfordern einen außergewöhnlich kleinen Wegsensor um die Bauraumbeschränkungen zu erfüllen.

Die Ergebnisse der einzelnen Sensoren sollen dann, eventuell durch Soll-IstVergleich, zu einem Gesamtergebnis über die Artikelqualität zusammengefasst werden.

Zur Überwachung der Bewegung der Einzelfäden einer Fadenschar stehen im derzeitigen Stand der Technik lediglich begrenzte Möglichkeiten zur Verfügung.

Aus EP 3165 490 A1 ist eine Vorrichtung bekannt, die es erlaubt einzelne Fäden beim Einlauf in eine Textilmaschine zu überwachen. Das dort beschriebene Messsystem auf Basis eines piezoelektrischen Sensors kann aber nur zwischen Bewegung des Fadens und Stillstand bzw. Abwesenheit des Fadens unterscheiden. Dies dient, wie in SE517544C2 ausgeführt wird, zur Erkennung von Fadenbruch.

USD733586S und USD873156 zeigen in Verbindung mit der
URL https://eltex.se/category-carpet-tufting/
die Anwendung von Piezosensoren zur Überwachung einer Vielzahl von Fäden einer Fadenschar speziell an einer Tuftingmaschine. Die hier dargestellten Vorrichtungen erkennen die Anwesenheit eines Fadens über die vom Faden ausgeübte Kraft auf das Piezoelement und die Bewegung des Fadens über das am Piezoelement durch Reibung erzeugte Rauschsignal. Diese Sensoren dienen daher der Erkennung von Fadenbruch, da ein gebrochener Faden am Sensor nicht mehr vorhanden ist oder keine Bewegung am Sensor aufweist.

Die Vorrichtung ist jedoch nicht in der Lage den Fadentransport in seiner Weglänge quantitativ zu erfassen.

Des Weiteren ist aus EP 2004008745 eine "Vorrichtung und ein Verfahren zum Erfassen von Fehlerstellen in Tufting-Ware und Tufting-Maschine" bekannt. In diesem Fall werden Fehler im Tufting-Prozess jedoch erst einige Stiche nach der Formung der Polschlinge und nicht während dessen erkannt; und es erfolgt keine quantitative Erfassung der einlaufenden Fadenlängen.

Es ist demgegenüber Aufgabe der vorliegenden Erfindung eine Vorrichtung der eingangs bezeichneten Art bereitzustellen, die bei einfachem Aufbau eine zuverlässige Erfassung der einlaufenden Weglänge unabhängig von Fadenart, Fadenabstand und anderen Prozessparametern mit hinreichend hoher Genauigkeit zulässt.

Diese Aufgabe wird durch eine Vorrichtung der eingangs bezeichneten Art gelöst, die folgende Komponenten enthält:
- einen Optical Tracking Sensor pro Faden
- einen jeweils mit dem Sensor verbundenen Mikrocontroller mit zugehörigen peripheren Komponenten auf einer Leiterplatte
- ein Datenübertragungssystem als elektronisches Bussystem oder Netzwerk
- eine zentrale Auswerteeinheit
- in bevorzugter Ausführung mit einem Bildschirm zur Anzeige
- und in ebenfalls bevorzugter Ausführung einem Interface zum Austausch von Daten und/oder Signalen mit einer externen Steuerung, z.B. der Maschinensteuerung.

Optical Tracking Sensoren sind in verschiedenen Ausführungen bekannt, wie sie und ihre Anwendung zum Beispiel in US4794384A "Optical Translator Device", US4751505A "Optical Mouse" oder US6433780B1 "Seeing Eye Mouse for a Computer System" beschrieben sind.

Die dort gezeigten Vorrichtungen für die Anwendung als sogenannte "optische Computermaus" beinhalten jeweils den Optical Tracking Sensor als auf einem Chip integrierte opto-elektronische Schaltung.

Derartige Bauteile werden als Massenware hergestellt und größtenteils in optischen Computermäusen verbaut.

Sie erlauben es, die Bewegung von an dem Sensor in meist geringem Abstand vorbeigeführten Oberflächen quantitativ in den 2 Koordinaten einer Ebene senkrecht zur Blickrichtung des Sensors zu erfassen.

Für die hier beschriebene Anwendung ist es häufig ausreichend von beiden erfassten Koordinaten nur eine zu benutzen.

In der erfindungsgemäßen Vorrichtung wird anstelle der Auflagefläche für eine Computermaus (Tischoberfläche, Mauspad usw.) ein Faden in geringem Abstand am Optical Tracking Sensor in dessen Sichtfeld so vorbeigeführt, dass die Bewegung des Fadenobjektes erkannt wird.

Ein Optical Tracking Sensor beinhaltet als wesentliche Bestandteile einen integrierten Schaltkreis mit der Funktion einer miniaturisierten digitalen Kamera und ebenfalls on-Chip einen Auswerte Prozessor, der die Bewegungskoordinaten als gewünschten Messwert ermittelt. Bei einigen - bevorzugt zu verwendenden - Bauteiltypen ist eine Lichtquelle ebenfalls in diesem Sensorbaustein integriert, andernfalls wird eine externe Lichtquelle in Form meist einer LED oder Laserdiode zusätzlich verbaut.

Durch die Integration der Sensorfunktionalität in einen Chip sind Optical Tracking Sensoren in extrem kleinen Bauformen verfügbar, so dass eine ausreichend geringe Baugröße eines Einzelsensors erreicht wird, um die erfindungsgemäße Vorrichtung in den überaus begrenzten Bauraum an der Maschine zu integrieren.

Als Beispiel sei der Sensortyp PAT 9125 EL des Herstellers PIXAT genannt, der auf der Leiterplatte eine Fläche von 3,5 mm × 3,2 mm beansprucht und eine Höhe von 1 mm aufweist.

In einer bevorzugten Ausführung beinhaltet die Vorrichtung, falls erforderlich, Fadenführungselemente, die den Faden in geeignetem Abstand von z.B. 2 mm an der Chipoberfläche vorbeiführen und Querbewegungen des Fadens auf ein Minimum reduzieren.

In einer ebenfalls bevorzugten Ausführung beinhaltet die Vorrichtung eine transparente Scheibe zwischen Faden und Sensor, die den Sensor und andere Komponenten vor mechanischer Beschädigung und Verschmutzung schützt.

In einer vorteilhaften Ausgestaltung der Erfindung werden mehrere Optical Tracking Sensoren auf einer gemeinsamen Leiterplatte platziert und so angeordnet, dass ihr Querraster einem ganzzahligen Vielfachen das Fadenabstands entspricht.

In einer weiterhin vorteilhaften Ausgestaltung der Erfindung werden die Sensoren auf einer oder mehreren Leiterplatten in schräg seitlich versetzten Reihen untereinander angeordnet, und/oder auf Vorder- und Rückseite der Vorrichtung angebracht, so dass jeder Faden einer Fadenschar damit erfasst werden kann.

Bevorzugt werden mehrere Sensoren in einem gemeinsamen als Sensorträger fungierenden Gehäuse eingebaut. So entstehende Multi-Sensor-Module können dann vorteilhaft aneinandergereiht werden, um die gesamte Breite der Fadenschar an der Maschine zu überspannen.

Die integrierte Schaltung des Optical Tracking Sensor verfügt üblicherweise über ein I2C- oder SPI-Businterface, über das Daten mit einem Mikrocontroller ausgetauscht werden. Die Vorrichtung enthält einen oder mehrere Mikrocontroller, an den jeweils einer oder mehrere Chips als Optical Tracking Sensoren angebunden werden. Der Mikrocontroller führt gegebenenfalls eine Vorverarbeitung der erfassten Messwerte durch. In einer bevorzugten Ausführungsform der Erfindung sorgt der Mikrocontroller auch für eine Synchronisation der Messdaten, sodass diese synchron mit dem Maschinenzyklus erfasst werden.

Der oder die Mikrocontroller geben ihrerseits die eventuell vorverarbeiteten Daten über ein weiteres elektronisches Bussystem oder Netzwerk an eine zentrale Auswerteeinheit weiter, die die Daten aller erfassten Fäden der Maschine zusammenfasst. Diese zentrale Auswerteeinheit übernimmt gegebenenfalls auch die Bewertung der erfassten Messdaten durch Soll-IstVergleich und gibt entsprechende Kontrollinformationen an die Maschinensteuerung weiter.

Der geringe Preis der in Chip-Technologie hergestellten Optical Tracking Sensoren erlaubt es, die in der praktischen Anwendung benötigte Vielzahl von Fäden (häufig ca. 2000) mit wirtschaftlich vertretbarem Aufwand jeweils mit einem Sensor pro Faden zu überwachen.

Die Erfindung betrifft eine Textilmaschine zur Herstellung textiler Flächen, bevorzugt Maschinen zur Teppichherstellung, wie Teppich-Webmaschinen oder Tufting Maschinen, bei denen vergleichsweise dickes Garn als Polgarn zugeführt wird.

Am Beispiel einer Tufting Maschine wird die Vorrichtung weiter beschrieben. Bei einer Tufting Maschine wird Polgarn üblicherweise extern von oben aus einem Spulengatter oder von Schärbäumen als Fadenschar der Maschine zugeführt. Gängige Fadenzahlen liegen in der Größenordnung von 2000 Fäden für eine übliche Arbeitsbreite von 4 bis 5 m. Die Fäden werden meist von Förderwalzen transportiert und einer oder mehreren Nadelreihen zugeführt, die das Polgarn in einen separat zugeführten Tuftgrund einarbeiten. In Sonderfällen erfolgt der Transport des Polgarns ohne Förderwalzen direkt durch die Nadelbewegung.

Auf ihrem Weg zu den Nadeln passieren die Fäden üblicherweise eine oder mehrere Fadenführerleisten.

Es gibt 2 bevorzugte Messpositionen, an denen die Bewegung der Fäden erfasst wird.

Die beiden Sensorpositionen unterscheiden sich in ihrer Eignung für das Ziel der Messaufgabe. An Position A, vor und nahe an den Faden-Förderwalzen, ist der Fadenlauf ruhig, gleichmäßig und unterliegt kaum Schwankungen während der Zeit eines Maschinenzyklus. Aus diesem Grund kann hier eine hohe Messgenauigkeit der Weglängenmessung erreicht werden.

Die zweite bevorzugte Sensor-Position B liegt zwischen den Förderwalzen und den Nadeln. Hier liefert die gemessene Weglänge zusätzliche Information über den korrekten Ablauf des Fadeneintrags durch die Nadel mithilfe eines Soll-Ist-Vergleichs mit Referenzwerten aus korrekter Produktion.

Speziell lässt sich an Position B auf diese Weise die korrekte Ausformung eines Teppichmusters aus folgendem Grund überprüfen.

Zwei unterschiedliche Verfahren werden häufig zur Musterung von Teppich eingesetzt:
1. die Variation der Polhöhe (Schlingengröße) da die Farben der höheren Pole dominieren.
2. Der seitliche Versatz der Nadelreihe quer zur Produktionsrichtung von Maschinenzyklus zu Maschinenzyklus und damit die Variation der Position der Pole eines Fadens in Querrichtung.

Bei beiden Verfahren wirkt sich die Mustergestaltung auf die pro Maschinenzyklus verbrauchte Fadenlänge aus und kann daher durch Vergleich der erfassten Messdaten mit Referenzwerten überprüft werden.

Die Erfindung wird im Folgenden anhand der beiliegenden Figuren beispielhaft erläutert. Es stellen dar:
- Fig.1: eine schematische Darstellung der Anordnung zur Messung der Transportbewegung eines Fadens mit Hilfe eines Optical Tracking Sensors;
- Fig. 2: ein Schaltschema der elektronischen Komponenten;
- Fig. 3: eine schematische Darstellung eines Ausschnitts einer Fadenschar in einer Fadenführerleiste im Größenvergleich zu einem kommerziell verfügbaren Optical Tracking Sensor.
- Fig. 4: schematische Darstellung eines erfindungsgemäßen Moduls mit einer Vielzahl von Optical Tracking Sensoren
- Fig. 5: schematischer Querschnitt eines Multi-Sensor-Moduls.
- Fig.6: eine schematische Seitenansicht einer textilen Produktionsanlage mit Angabe zweier vorteilhafter Sensorpositionen
- Fig. 7: schematische Darstellung eines getufteten Schlingen-Teppichs mit verschiedenen Polhöhen

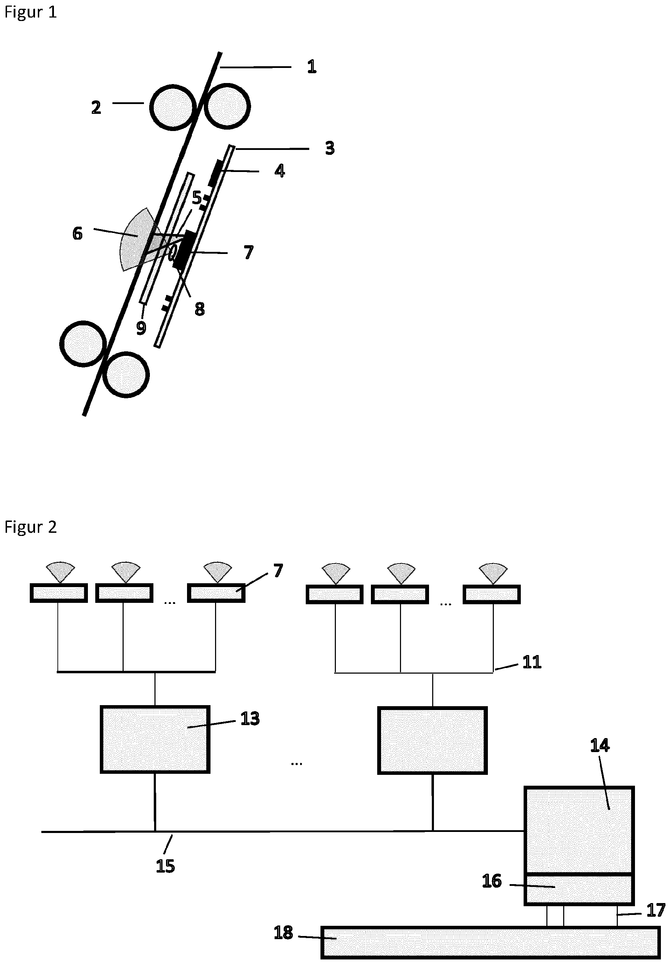

Figur 1 zeigt schematisch die Anordnung eines Optical Tracking Sensors zur Weglängenmessung eines einlaufenden Fadens 1. Der Faden wird dazu von Fadenführungs- Elementen 2 geführt und in einem definierten Abstand zum Sensor gehalten. Der Sensor ist als Chip 7 ausgebildet. Dieser Chip ist neben einem Mikrocontroller 4 und weiteren peripheren Bauelementen auf einer Leiterplatte 3 montiert. Der Faden wird so geführt, dass er im Leuchtfeld 5 und Sichtfeld 6 des Sensorchips positioniert ist. Das Leuchtfeld 5 kann dabei von einer auf dem Sensorchip integrierten Lichtquelle oder einer externen Lichtquelle - hier nicht dargestellt - (z.B. LED oder Laserdiode ) erzeugt werden. Bestimmte Bauformen des Optical Tracking Sensors erfordern eine Linse 8 zur Abbildung des Fadens auf die optisch empfindliche Fläche des Sensors. Andere - bevorzugte - Ausführungen des Sensorchips erfordern diese externe Linse 8 nicht.

Figur 2 zeigt das Schaltschema, in dem einer oder eine Vielzahl von Optical Tracking Sensoren 7 in einer elektrischen Schaltung angeschlossen werden, um in einem Gesamtmesssystem idealerweise alle Fäden einer Fadenschar zu überwachen.
Meist verfügen Optical Tracking Sensoren über elektronisches Bussystem 11 (üblicherweise I2C oder SPI Bus) über das sie an einen Prozessor 13, z.B. einen Mikrocontroller, angeschlossen werden, wobei ein Mikrocontroller mit mehreren, z.B. 64, Optical Tracking Sensoren kommuniziert.
Für die Überwachung einer gesamten Fadenschar mit typischerweise 2000 Fäden werden ebenso viele Optical Tracking Sensoren benötigt. Daher verwendet die Anordnung eine Mehrzahl von Prozessoren 13, die ihrerseits über ein Bussystem oder Netzwerk 15 mit einer zentralen Auswerteeinheit 14, wie einem PC kommunizieren. Vorteilhaft ist es, wenn diese zentrale Auswerteeinheit mit einem Maschineninterface 16 gekoppelt ist und Daten über eine oder mehrere Signalleitungen 17 mit der Maschinensteuerung 18 austauscht. Zum Beispiel kann so die Produktion unterbrochen werden, sobald ein Produktionsfehler über das Messsystem detektiert wird.

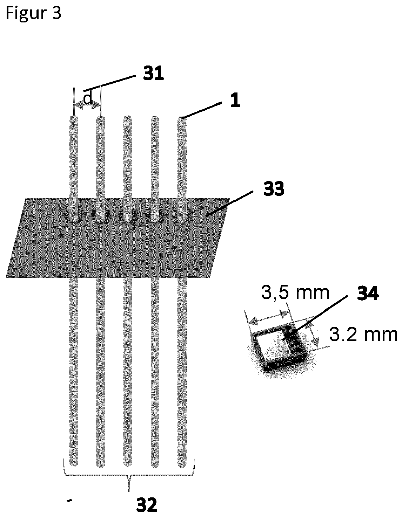

Figur 3 zeigt als etwa maßstäblichen Größenvergleich ein häufig verwendetes Fadenraster 31 von d = 1/10 Zoll für die Fäden 1 einer Fadenschar 32. Die Fadenschar wird üblicherweise in den Bohrungen einer Fadenführerleiste 33 geführt.
Im Vergleich dazu sind als Beispiel die Dimensionen eines kommerziell verfügbaren Optical Tracking Chips 34 dargestellt, der eine Fläche von 3,5 mm mal 3,2 mm einnimmt.

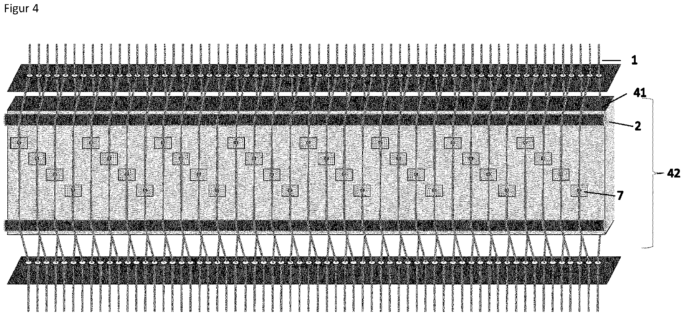

Figur 4 zeigt schematisch die Anordnung einer Vielzahl von Optical Tracking Sensoren 7, die in einem Gehäuse 41 zu einem Multi-Sensor-Modul 42 zusammengefasst werden.
Für häufig eingesetzte Fadenraster von z.B. 5/64. Zoll, 1/10 Zoll oder 1/8 Zoll werden die Optical Tracking Sensoren aufgrund der Größe derzeit verfügbarer kommerzieller Typen in Reihen untereinander seitlich versetzt angeordnet.
Gegebenenfalls werden zudem Vorder- und Rückseite des Gehäuses mit Sensoren bestückt und die Fäden 1 einer Fadenschar entsprechend aufgeteilt. Die Fäden werden dabei von Fadenführern 2 geleitet, die in diesem Beispiel als Überlaufstäbe ausgeführt sind.
Derartige Module können in ihrer Längsrichtung aneinandergereiht werden und so die gesamte Breite einer Textilmaschine von mehreren Metern überspannen.

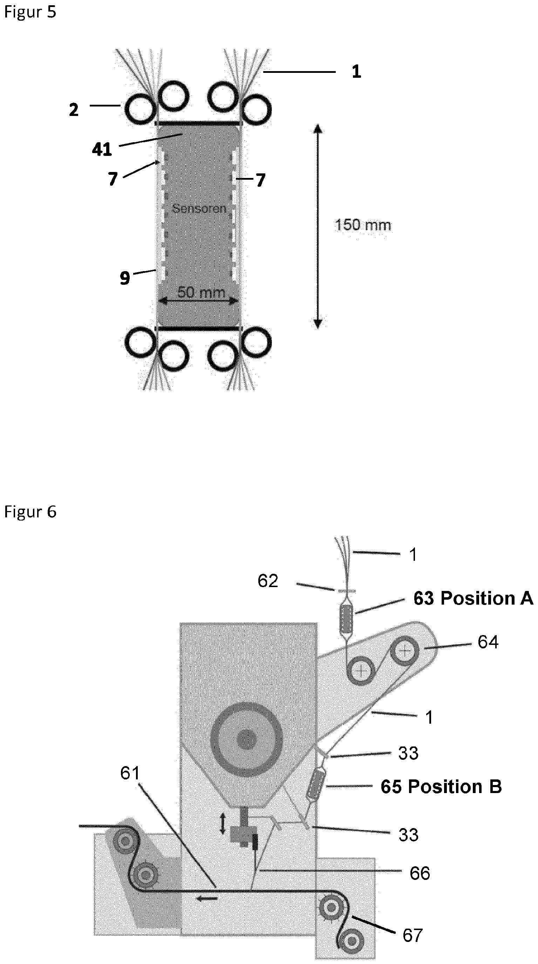

Figur 5 zeigt schematisch den Querschnitt eines Multi-Sensor-Moduls bei dem in diesem Beispiel sieben Reihen von Optical Tracking Sensoren 7 jeweils auf Vorder- und Rückseite des Gehäuses 41 angeordnet sind. Ebenfalls dargestellt ist die Positionierung der Fäden 1 mithilfe von stabförmigen Fadenführern 2 in relativ geringem Abstand von den Sensoren 7. Eine transparente Deckplatte 9 schützt die Sensoren und andere Elektronik vor Verschmutzung und mechanischer Beschädigung. Als Beispiel sind die Dimensionen von 50 mm mal 150 mm des Querschnitts eines derartigen Multi-Sensor-Moduls angegeben.

Figur 6 zeigt schematisch die Seitenansicht einer textilen Produktionsanlage zur Teppichherstellung nach dem Tufting Verfahren. In der dargestellten Produktionsmaschine wird der Maschine von oben Polgarn 1 zugeführt. Förderwalzen 64, die häufig paarweise angeordnet sind, ziehen das Polgarn aus dem Garnvorrat ab und transportieren es weiter über eine oder mehrere Fadenführerleisten 34 zur Nadelreihe 66. In der Tufting Zone 61 wird das Polgarn mithilfe der Nadeln in den Tuftgrund 67 eingearbeitet und formt dort als Pol den Teppichflor.
Die eingezeichneten Punkte A 63 und B 65 bezeichnen die Positionen, an denen die oben beschriebene Anreihung von Multi-Sensor-Modulen vorteilhaft eingesetzt werden.

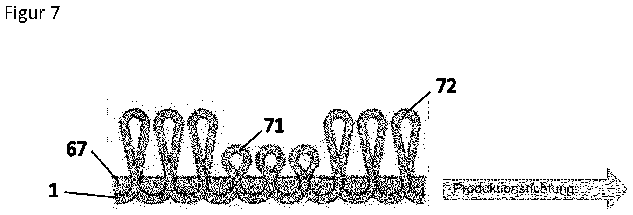

Figur 7 zeigt schematisch am Beispiel eines Schlingenteppichs wie das Polgarn 1 in den Tuftgrund 67 eingearbeitet wird. Dabei ist die Größe der Schlingen von der pro Maschinenzyklus zugeführten Fadenlänge abhängig. Die Variation der Polhöhe ist eine häufige Methode Farbmuster in einem Teppich zu erzeugen. Bei Betrachtung des Teppichs dominiert die Farbe der großen Polschlingen 72 gegenüber der Farbe der kleinen Polschlingen 71, da zudem kleine Teppichschlingen von großen Teppichschlingen der Fadenreihen der benachbarten Nadeln überdeckt werden.

## Patentansprüche

1. Vorrichtung zur Messung der Weglänge, den ein oder mehrere in einer Textilmaschine verarbeiteten Fäden in Fadenlaufrichtung zurücklegen, **dadurch gekennzeichnet, dass** die Messung mit einem auf einem Chip integrierten Optical-Tracking-Sensor erfolgt.

2. Vorrichtung nach Anspruch 1, **dadurch gekennzeichnet, dass** der Optical-Tracking-Sensor als Massenprodukt eines Halbleiterherstellers verfügbar ist.

3. Vorrichtung nach Anspruch 1 oder 2, **dadurch gekennzeichnet, dass** im geeigneten Bauraum an einer Textilmaschine ein Sensorelement oder eine Vielzahl von Sensorelementen für jeweils einen oder mehrere Fäden angebracht werden können.

4. Vorrichtung nach einem der vorangegangenen Ansprüche, **dadurch gekennzeichnet, dass** alle Fäden einer Fadenschar der Textilmaschine nahezu Zeit synchron erfasst werden.

5. Vorrichtung nach einem der vorhandenen vorangegangenen Ansprüche, **dadurch gekennzeichnet, dass** die Erfassung der gemessenen Weglängen bezogen auf jeweils einen Maschinenzyklus erfolgt.

6. Vorrichtung nach einem der vorangegangenen Ansprüche, **dadurch gekennzeichnet, dass** der Optical Tracking Sensor den oder die Fäden nicht berührt.

7. Vorrichtung nach einem der vorangegangenen Ansprüche, **dadurch gekennzeichnet, dass** das Messsignal eines oder mehrerer Sensorelemente durch ein elektronisches Datenübertragungssystem an eine zentrale Stelle weitergeleitet wird.

8. Vorrichtung nach einem der vorangegangenen Ansprüche, **dadurch gekennzeichnet, dass** das Messergebnis für eine Gruppe von Fadenarten, die sich in ihren Eigenschaften wie zum Beispiel Farbe, Glanz oder Bausch unterscheiden, im Rahmen der erforderlichen Messgenauigkeit unabhängig von der Fadenart ermittelt wird.

9. Vorrichtung nach einem der vorangegangenen Ansprüche, **dadurch gekennzeichnet, dass** die Textilmaschine eine zur Teppichproduktion verwendete Maschine ist.

10. Vorrichtung nach einem der vorangegangenen Ansprüche, **dadurch gekennzeichnet, dass** die Textilmaschinen eine Tufting Maschine ist.
